# EUROPEAN PATENT APPLICATION

(11) **EP 4 641 791 A1**
(43) Date of publication of application: **29.10.2025**
(21) Application number: 24216838.3
(22) Date of filing: 02.12.2024
(51) Int. Cl.: H01M 50/213, H01M 50/244

(54) **BATTERY PACK**

(30) Priority: 25.04.2024 CN 202420889373 U
(71) Applicant: CALB Group Co., Ltd., Changzhou City, Jiangsu Province (CN)
(72) Inventor: CHENG, Keqiang, Changzhou City, Jiangsu Province (CN); LI, Huanfei, Changzhou City, Jiangsu Province (CN); XIE, Benjun, Chengdu City, Sichuan Province (CN)
(74) Representative: Becker, Eberhard

(57) **Abstract**

A battery pack includes a battery box (100), a cylindrical battery (200) and a fixing plate (300). A first surface (210) and a second surface (220) of the cylindrical battery (200) are arranged in and respectively perpendicular to a first direction (X). A third surface (230) is connected between the first surface (210) and the second surface (220). A first weld mark (231) is formed at a connection region of the third surface (230) and the first surface (210). The third surface (230) is provided with a first insulating layer (240) which does not cover the first weld mark (231). The fixing plate (300) is disposed opposite and fixedly connected to the third surface (230). The first weld mark (231) is spaced apart from the fixing plate (300). A minimum spacing between the first surface (210) and the fixing plate (300) in the first direction (X) is 1.5 mm-30 mm.

## Description

### Technical Field

The present invention relates to the technical field of batteries, and particularly relates to a battery pack.

### Background Art

In the conventional design of the battery pack, some of the battery packs adopt a design in which a metal fixing plate is disposed on a third surface of the cylindrical battery. However, since the end surface and the third surface of the cylindrical battery are connected by welding, a weld mark is formed at the connection of the third surface and the end surface. This weld mark region has a higher risk of short-circuiting than that of other regions of the third surface, and is easy to short-circuit with the metal fixing plate, thus affecting the safety of the battery pack.

### Summary of the Invention

A main object of the present invention is to overcome at least one of the above-mentioned disadvantages of the prior art and provide a battery pack with better safety.

In order to achieve the above purpose, the present invention adopts the following technical solution.

According to an aspect of the present invention, a battery pack is provided, including a battery box, a cylindrical battery and a fixing plate; the cylindrical battery is disposed in the battery box; two circular end surfaces of the cylindrical battery are a first surface and a second surface, respectively; a cylindrical surface of the cylindrical battery is a third surface; the first surface and the second surface are arranged at intervals in a first direction and are respectively perpendicular to the first direction; the first direction is an axial direction of the cylindrical battery; the third surface is connected between the first surface and the second surface; a first weld mark is formed at a connection region of the third surface and the first surface; the third surface is provided with a first insulating layer; the first insulating layer does not cover the first weld mark; and the fixing plate is disposed on the third surface of the cylindrical battery and made of a metal material, wherein the fixing plate is disposed opposite and fixedly connected to the third surface; wherein the first weld mark is spaced apart from the fixing plate; and a minimum spacing between the first surface and an adjacent edge of the fixing plate in the first direction is 1.5 mm-30 mm or more.

From the above technical solution, it can be seen that the advantages and positive effects of the battery pack proposed by the present invention are as follows.

The battery pack proposed by the present invention includes a cylindrical battery and a fixing plate; a first weld mark is formed at a connection region between the third surface and the first surface of the cylindrical battery; the third surface is provided with a first insulating layer which does not cover the first weld mark. The fixing plate is made of a metal material, and the fixing plate is disposed on the third surface of the cylindrical battery; the first weld mark is spaced apart from the fixing plate; and a minimum spacing between the first surface and an adjacent edge of the fixing plate in the axial direction of the cylindrical battery is 1.5 mm-30 mm. By means of the above-mentioned structural design, the present invention can provide strong structural support and thermal conductivity performance by using the fixing plate made of a metal material. On this basis, the present invention can effectively avoid the electric connection between the fixing plate and the relevant region of the cylindrical battery by spacing the fixing plate at a distance from the first weld mark, so as to reduce the risk of short circuit and improve the safety of the battery pack.

### Brief Description of the Drawings

Various objects, features and advantages of the present invention will become more apparent by considering the following detailed description of preferred embodiments of the present invention in conjunction with the accompanying drawings. The drawings are merely exemplary illustrations of the present invention and are not necessarily drawn to scale. In the drawings, like reference numerals refer to the same or similar parts throughout the several views. In the drawings,
Fig. 1 is a structurally perspective view showing a battery pack according to an exemplary embodiment.
Fig. 2 is a partially enlarged view of the battery pack shown in Fig. 1.
Fig. 3 is a plan view of a part of the structure shown in Fig. 2.
Fig. 4 is a structurally perspective view of a partial structure of the battery pack shown in Fig. 1.
Fig. 5 is a perspective exploded view of Fig. 4.
Fig. 6 is a schematic enlarged view of a portion A in Fig. 4.

### Description of Reference Numerals:

100, battery box;
110, bottom plate;
1101, module bottom plate;
200, cylindrical battery;
201, battery set;
202, battery column;
210, first surface;
220, second surface;
230, third surface
231, first weld mark;
232, second weld mark;
240, first insulating layer;
300, fixing plate;
310, second insulating layer
400, heat exchange plate;
410, fourth surface
500, conductive bar;
510, connector;
520, bridging portion;
600, insulating plate;
610, hollowed-out portion;
D1, minimum spacing;
D2, minimum spacing;
L1, length;
L2, length;
X, first direction;
Y, second direction;
Z, third direction.

### Detailed Description of the Invention

Typical examples embodying the features and advantages of the present invention will be described in detail in the following description. It should be understood that the present invention can have various modifications in different examples without departing from the scope of the present invention, and that the description and the drawings are intended for illustrative purposes in nature and are not intended to limit the present invention.

In the following description of different exemplary embodiments of the present invention, reference is made to the accompanying drawings, which form a part of the present invention, and in which different exemplary structures, systems, and steps that may implement aspects of the present invention are shown by way of example. It should be understood that other specific aspects of components, structures, exemplary devices, systems, and steps may be used, and structural and functional modifications may be made without departing from the scope of the present invention. Moreover, while the terms "over", "between", "within", and the like may be used in this description to describe various exemplary features and elements of the present invention, these terms are used herein for convenience only, e.g., in accordance with the direction of the examples described in the figures. Nothing in this description should be understood as requiring a specific three-dimensional direction of the structure to fall within the scope of the present invention.

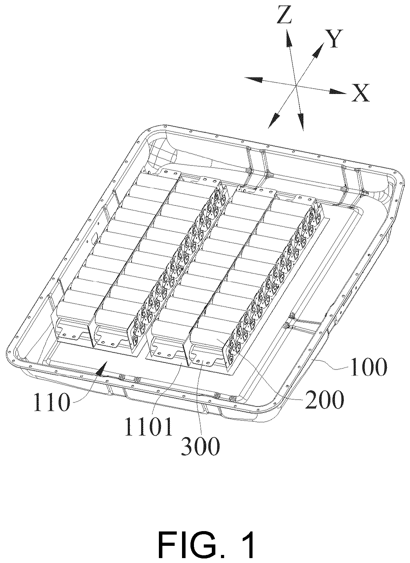

Referring to Fig. 1, there is representatively shown a schematic perspective view of a battery pack according to the present invention. In this exemplary embodiment, the battery pack proposed by the present invention is described by taking a battery applied to a vehicle as an example. It will be readily understood by those skilled in the art that in order to apply the relevant design of the present invention to other types of battery devices, various modifications, additions, substitutions, deletions or other changes to the following specific embodiments are still within the scope of the principles of the battery pack proposed by the present invention.

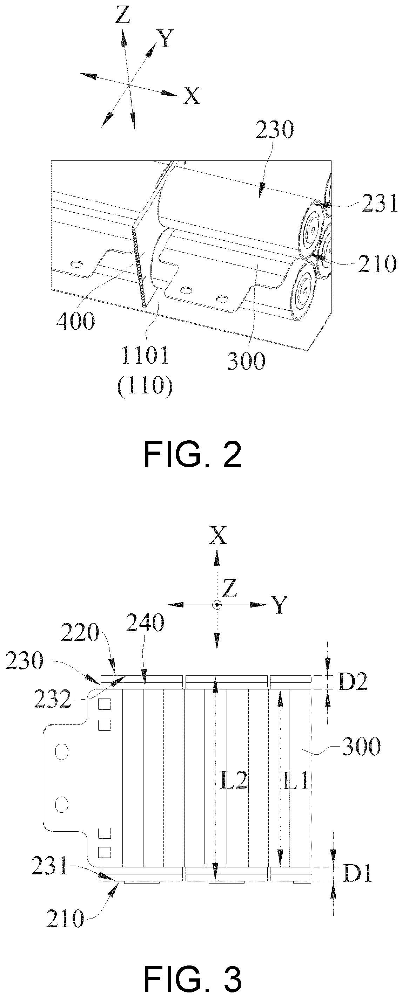

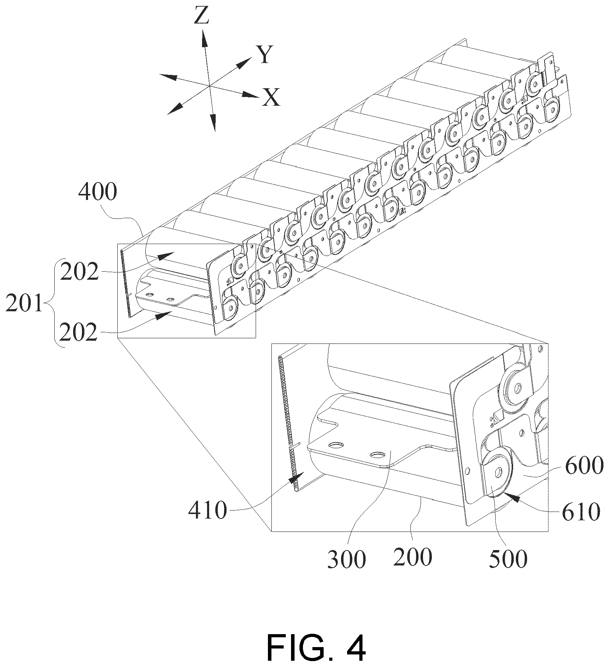

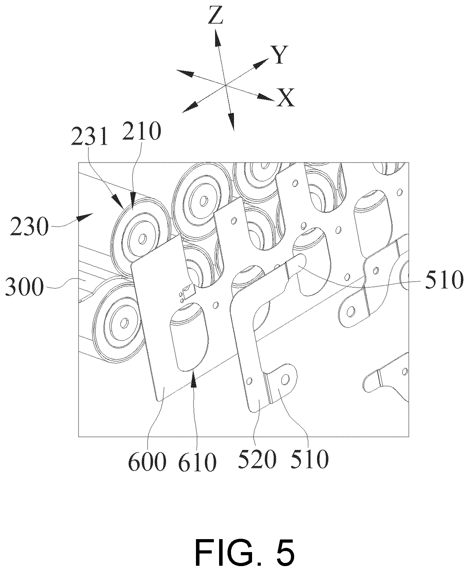

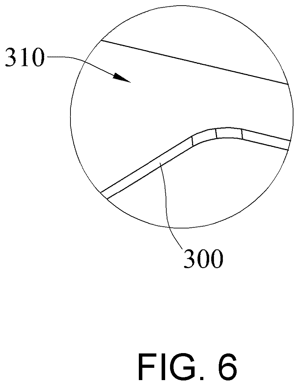

As shown in Fig. 1, in an embodiment of the present invention, the battery pack proposed by the present invention includes a battery box 100, a cylindrical battery 200 and a fixing plate 300. Referring to Figs. 2 to 6, Fig. 2 representatively shows a partially enlarged view of the battery pack, in which structures such as a conductive bar 500 and an insulating plate 600 are omitted. Fig. 3 representatively shows a plan view of a part of the structure shown in Fig. 2, in which a planar structure of a cylindrical battery 200 and a fixing plate 300 is specifically shown. Fig. 4 representatively shows a structurally perspective view of a partial structure of the battery pack, in which a combined structure of a partial cylindrical battery 200, a heat exchange plate 400, a conductive bar 500, and an insulating plate 600 is specifically shown. Fig. 5 representatively shows a perspective exploded view of Fig. 4. Fig. 6 representatively shows a schematic enlarged view of the portion A in Fig. 4. Hereinafter, the structure, connection mode and functional relationship of each main component of the battery pack proposed by the present invention will be described in detail in conjunction with the above drawings.

As shown in Figs. 1-3, in an embodiment of the present invention, a cylindrical battery 200 is disposed in a battery box 100. The cylindrical battery 200 is substantially cylindrical, and two circular end surfaces thereof are a first surface 210 and a second surface 220, respectively. The cylindrical surface of the cylindrical battery 200 is a third surface 230. The first surface 210 and the second surface 220 are spaced apart in a first direction X, which is an axial direction of the cylindrical battery 200, and are respectively perpendicular to the first direction X. The third surface 230 is connected between the first surface 210 and the second surface 220. Here, the third surface 230 and the first surface 210 are in a welded connection. Therefore, a first weld mark 231 is formed at a connection region between the third surface 230 and the first surface 210. In addition, the third surface 230 is provided with a first insulating layer 240, such as but not limited to an insulating coating, which does not cover the first weld mark 231. The fixing plate 300 is disposed on the third surface 230 of the cylindrical battery 200 and is made of metal. The fixing plate 300 is disposed opposite to the third surface 230 and is fixedly connected thereto. On this basis, the first weld mark 231 is spaced apart from the fixing plate 300. In the first direction X, the minimum spacing D1 between the first surface and the adjacent edge of the fixing plate 300 is 1.5 mm-30 mm, for example, 1.5 mm, 5 mm, 10 mm, 20 mm, 30 mm, etc. By means of the above-mentioned structural design, the present invention can provide strong structural support and thermal conductivity performance by using the fixing plate 300 made of a metal material. On this basis, the present invention can effectively avoid the electric connection between the fixing plate 300 and the relevant region of the cylindrical battery 200 by spacing the fixing plate 300 at a distance from the first weld mark 231, so as to reduce the risk of short circuit and improve the safety of the battery pack.

Note that, in practical applications, it may be difficult to accurately locate the first weld mark 231 formed by welding the first surface 210 and the third surface 230 of the cylindrical battery 200 at a junction between the first surface 210 and the third surface 230 due to different welding processes. For example, the first weld mark 231 may be located at a position where the third surface 230 is adjacent to the first surface 210, such as an end region of the third surface 230 in the first direction X. Alternatively, the first weld mark 231 may also be located at a position where the first surface 210 is adjacent to the third surface 230, such as a peripheral region of the first surface 210. Accordingly, the connection region between the first surface 210 and the third surface 230 may be understood to include a partial region of the third surface 230, a partial region of the first surface 210, or a junction of the two. In addition, since the weld mark may not be a standard circular path, the minimum spacing D1 between the first surface 210 and the fixing plate 300 is used in this specification to represent the minimum spacing between the first weld mark and the fixing plate 300. Similarly, the following description of the second weld mark 232 may also be understood in conjunction with the above description.

As shown in Fig. 3, in an embodiment of the present invention, the third surface 230 and the second surface 220 of the cylindrical battery 200 are connected by welding. Therefore, a second weld mark 232 is formed at the connection region between the third surface 230 and the second surface 220. On this basis, the second weld mark 232 may also be spaced apart from the fixing plate 300. The minimum spacing D2 between the second surface 220 and the adjacent edge of the fixing plate 300 in the first direction X is 1.5 mm-30 mm, for example, 1.5 mm, 5 mm, 10 mm, 20 mm, 30 mm, etc. By the above-mentioned structural design, the present invention may further reduce the risk of short circuit and further improve the safety of the battery pack.

In an embodiment of the present invention, the third surface 230 and the second surface 220 may be integrally formed. On this basis, the minimum spacing D2 between the second surface 220 and the adjacent edge of the fixing plate 300 in the first direction X is greater than or equal to 1.5 mm-2.8mm, e.g., 1.5 mm, 1.7 mm, 2 mm, 2.5 mm, 2.8 mm, etc. By means of the above-mentioned structural design, the present invention is conducive to achieving a lightweight design of the fixing plate 300, and also can facilitate the assembly of the fixing plate 300, better absorb the assembly tolerance, and avoid friction and scratch between the fixing plate 300 and the heat exchange plate 400 attached to the second surface 220 under the vibration condition of the battery pack.

As shown in Fig. 3, in an embodiment of the present invention, the ratio of the length L1 of the fixing plate 300 to the length L2 of the third surface 230 in the first direction X may be 5%-95%, such as 5%, 15%, 25%, 30%, 50%, 80%, 95%, etc. By means of the above-mentioned structural design, the present invention can avoid that the fixing plate 300 covers too little of the cylindrical batteries 200 so that the heat conduction and the structural reinforcement effect of the fixing plate 300 are not obvious, and also can avoid that the fixing plate 300 covers too much of the cylindrical batteries 200 so that the minimum spacing between the fixing plate 300 and the above-mentioned weld mark is too small and affects the insulation effect, and can also reduce the weight of the fixing plate 300.

As shown in Figs. 4 and 5, in an embodiment of the present invention, at least two cylindrical batteries 200 are arranged to form a battery column 202 along a second direction Y that is perpendicular to the first direction X (e.g., parallel to the fourth surface 410 of the heat exchange plate 400 and parallel to the bottom plate 110). On this basis, the fixing plate 300 may be disposed on the third surface 230 of each cylindrical battery 200 belonging to one battery column 202. The fixing plate 300 has a wave shape. By the above-mentioned structural design, the present invention can make full use of the inner space of the battery box 100 to arrange the cylindrical battery 200, which is beneficial to improve the energy density of the battery pack. On this basis, the fixing plate 300 is applied for the corresponding arrangement of at least two cylindrical batteries 200 contained in a battery column 202 simultaneously, which is beneficial to reduce the number of parts and simplify the structural complexity. In some embodiments, for each cylindrical battery 200 belonging to one battery column 202, at least two fixing plates 300 may also be arranged for reinforcement and conducting heat, and each fixing plate 300 corresponds to at least one cylindrical battery 200, without being limited to this embodiment.

As shown in Figs. 4 and 5, based on the structural design that the fixing plate 300 simultaneously corresponds to the arrangement of each cylindrical battery 200 of the same battery column 202, in an embodiment of the present invention, at least two battery columns 202 are arranged to form a battery set 201 along a third direction Z which is perpendicular to the first direction X and perpendicular to the second direction Y (e.g., perpendicular to the bottom plate 110 and parallel to the fourth surface 410 of the heat exchange plate 400). On this basis, a fixing plate 300 may be provided between two adjacent battery columns 202 belonging to one battery set 201. By the above-mentioned structural design, the present invention can further improve the energy density of the battery pack by using the design of the battery set 201 formed by the multi-the battery set 201. On this basis, the fixing plate 300 is used to simultaneously provide heat conduction and structural reinforcement to two adjacent layers of battery columns 202 in the third direction Z, which is advantageous to reduce the number of parts and simplify the structural complexity. In some embodiments, with regard to each layer of the battery columns 202 belonging to one battery set 201, the present invention may also respectively provide a fixing plate 300 for restraint, which is not limited to this embodiment.

As shown in Figs. 4 and 5, in an embodiment of the present invention, the battery pack proposed by the present invention further includes a heat exchange plate 400, and the battery box 100 includes a bottom plate 110. On this basis, the cylindrical batteries 200 may be arranged in a "lying" manner with respect to the bottom plate 110, i.e., the axial direction (the first direction X) of the cylindrical batteries 200 is parallel to the bottom plate 110. In addition, the heat exchange plate 400 may be arranged perpendicularly with respect to the bottom plate 110. That is to say, the heat exchange plate 400 is arranged in an "upright" manner with respect to the bottom plate 110. The heat exchange plate 400 is in contact and heat exchange with the cylindrical battery 200 (which may be in direct contact or in indirect contact via other structures). Here, the heat exchange plate 400 has a fourth surface 410 facing towards the second surface 220, and the first surface 210 surfaces away from the heat exchange plate 400.

As shown in Figs. 4 to 5, in an embodiment of the present invention, the battery columns 202 may be respectively disposed on both sides of the heat exchange plate 400 in the first direction X. In other words, for two battery columns 202 that are adjacent in the first direction X, the cylindrical batteries 200 of the two are arranged with their respective second surfaces 220 facing each other (i.e., with their respective first surfaces 210 facing away from each other). The second surfaces 220 of the cylindrical batteries 200 of the two respectively surface towards two fourth surfaces 410 on both sides of the heat exchange plate 400. By the above-mentioned structural design, the present invention can use the heat exchange plate 400 to realize heat exchange with two battery columns 202 arranged in the first direction X, which is beneficial to reduce the number of parts and simplify the structural complexity.

Unlike the structural design in which the fixing plate 300 is spaced apart from the heat exchange plate 400 in the embodiment shown in Fig. 5 (namely, the fixing plate 300 does not cover the second weld mark 232), in an embodiment of the present invention, the fixing plate 300 may also be connected to the heat exchange plate 400. By the above-mentioned structural design, the present invention can use the fixing plate 300 to enhance the heat transfer between the third surface 230 of the cylindrical battery 200 and the heat exchange plate 400, thereby further improving the heat exchange effect.

In addition, when the third surface 230 has the second weld mark 232 and the fixing plate 300 is connected to the heat exchange plate 400, an insulation treatment may be performed on the second weld mark 232 region between the fixing plate 300 and the third surface 230, for example, an additional insulation structure may be provided.

In an embodiment of the present invention, the elastic modulus of the fixing plate 300 may be greater than or equal to 10 GPa. For example, the material of the fixing plate 300 may be metal, for example, the fixing plate 300 may be an aluminum plate, a steel plate, etc. With the above-mentioned design, the present invention can avoid insufficient reinforcement effect due to insufficient elastic modulus of the fixing plate 300. In some embodiments, the fixing plate 300 may also be an aluminum alloy plate, a steel aluminum composite plate, a copper plate, a copper alloy plate, or the like.

In an embodiment of the present invention, the fixing plate 300 and the third surface 230 of the cylindrical battery 200 may be bonded via a quick adhesive. By means of the above-mentioned design, the present invention can achieve convenient and rapid assembly by a quick adhesive and improve assembly efficiency.

As shown in Fig. 4, in an embodiment of the present invention, the battery pack further includes a conductive bar 500 disposed on a side of the first surface 210 of the cylindrical battery 200. The conductive bar 500 is suitable for realizing the electrical connection between two adjacent cylindrical batteries 200. For example, the conductive bar 500 may be connected to an electrode lead-out end disposed on the first surface 210 of the cylindrical battery 200. Specifically, the conductive bar 500 includes two connecting portions 510 connected to two adjacent cells, respectively, and a bridging portion 520 connected between the two connecting portions 510. On this basis, the battery pack proposed by the present invention may further include an insulating plate 600. The insulating plate 600 is partially located between the bridging portion 520 and the first surface 210, which is equivalent to the insulating plate 600 being partially located between the conductive bar 500 and the fixing plate 300. By the above-mentioned structural design, the present invention can optimize the insulating plate 600 to optimize the insulating effect between the conductive bar 500 and the fixing plate 300, further reducing the risk of short circuit, and further improving the safety of the battery pack.

As shown in Fig. 4, based on the structural design of the battery pack including a conductive bar 500 and an insulating plate 600, in an embodiment of the present invention, the insulating plate 600 may be provided with a hollowed-out portion 610 which is arranged corresponding to the position of the connecting portion 510. The hollowed-out portion 610 can expose a partial region of the first surface 210, and the connecting portion 510 is connected to the partial region of the first surface 210 exposed to the hollowed-out portion 610. Namely, the electrode leading-out end of the first surface 210 is exposed to the hollowed-out portion 610. By the above-mentioned structural design, the present invention can facilitate the connection between the conductive bar 500 and the battery on the basis of ensuring the insulation effect between the conductive bar 500 and the fixing plate 300.

In an embodiment of the present invention, the first insulating layer 240 may be an insulating coating. Further, the first insulating layer 240 may be coated on the third surface 230 of the cylindrical battery 200 via spraying. In some embodiments, when the first insulating layer 240 is an insulating coating, the first insulating layer 240 may also be applied by other coating processes, such as spin coating, etc. and is not limited in this embodiment.

As shown in Fig. 6, in an embodiment of the present invention, the surface of the fixing plate 300 may be provided with a second insulating layer 310, which may be, for example, an insulating sprayed layer. By the above-mentioned structural design, the present invention may further reduce the risk of short circuit and further improve the safety of the battery pack. In addition, when the fixing plate 300 is connected to the heat exchange plate 400 and the third surface 230 has the second weld mark 232, and the insulation can be provided at least between the fixing plate 300 and the second weld mark 232 via the second insulating layer 310. Of course, even when the second weld mark 232 is exposed outside the fixing plate 300 (e.g., when the fixing plate 300 and the heat exchange plate 400 are not connected), the surface of the fixing plate 300 may be provided with a second insulating layer 310, which is not limited to the above embodiments.

Based on the structural design that the surface of the fixing plate 300 is provided with a second insulating layer 310, in an embodiment of the present invention, the second insulating layer 310 may be an insulating coating. Further, the second insulating layer 310 may be coated on the surface of the fixing plate 300 via spraying. In some embodiments, when the second insulating layer 310 is an insulating coating, other coating processes, such as spin coating and the like, may be used for the second insulating layer 310 and are not limited in this embodiment.

As shown in Fig. 3, in an embodiment of the present invention, the third surface 230 of the cylindrical battery 200 may be provided with a first insulating layer 240. In order to facilitate observation and understanding. A dot fill pattern used in Fig. 3 represents the first insulating layer 240 disposed on the third surface 230. On this basis, along the first direction X, the fixing plate 300 may all fall within the range of the first insulating layer 240, namely, neither side edge of the fixing plate 300 in the first direction X exceeds the edge of the first insulating layer 240. By the above-mentioned structural design, the present invention may further reduce the risk of short circuit and further improve the safety of the battery pack.

The thickness of the fixing plate 300 may be 0.5 mm-10 mm, such as 0.5 mm, 1 mm, 2 mm, 5 mm, 10 mm, etc. By the above-mentioned structural design, the present invention can avoid the excessive space occupation caused by the excessive thickness of the fixing plate 300, and at the same time can avoid the insufficient rigidity of the fixing plate 300 to affect the reinforcement effect due to the excessive thickness of the fixing plate 300.

Note that, as an example of the embodiment shown in Fig. 1, when cylindrical batteries 200 are disposed on both sides of the heat exchange plate 400 in the first direction X, the heat exchange plate 400, the cylindrical batteries 200 on both sides and other related structures may together constitute a battery module. The battery module may be disposed on a module bottom plate 1101 and disposed on the bottom plate 110 of the battery box via the module bottom plate 1101. At this time, with regard to the relative arrangement relationship between each structure and the bottom plate 110 in this description, it can be correspondingly understood as the relative arrangement relationship between each structure and the module bottom plate 1101. By the above-mentioned structural design, the present invention can improve the integration degree of the battery module, which is beneficial to improve the assembly efficiency. It should be understood that in some embodiments, the battery pack may not be provided with the module bottom plate 1101, and the battery module may be provided directly on the bottom plate 110 of the battery box 100.

It should be noted here that the battery pack shown in the accompanying drawings and described in this description are only a few examples of many types of battery packs that can employ the principles of the present invention. It should be clearly understood that the principles of the present invention are by no means limited to any detail or any component of the battery pack shown in the drawings or described in this description.

In summary, the battery pack proposed in the present invention includes a cylindrical battery 200 and a fixing plate 300. A first weld mark 231 is formed at he connection region between the third surface 230 and the first surface 210 of the cylindrical battery 200. The third surface 230 is provided with a first insulating layer 240 which does not cover the first weld mark 231. The fixing plate 300 is made of a metal material, and the fixing plate 300 is disposed on the third surface 230 of the cylindrical battery 200; the first weld mark 231 is spaced apart from the fixing plate 300; and a minimum spacing between the first surface and an adjacent edge of the fixing plate 300 in the axial direction of the cylindrical battery 200 is 1.5 mm-30 mm. By means of the above-mentioned structural design, the present invention can provide strong structural support and thermal conductivity performance by using the fixing plate 300 made of a metal material. On this basis, the present invention can effectively avoid the electric connection between the fixing plate 300 and the relevant region of the cylindrical battery 200 by spacing the fixing plate 300 at a distance from the first weld mark 231, so as to reduce the risk of short circuit and improve the safety of the battery pack.

Exemplary embodiments of battery packs proposed by the present invention have been described and/or illustrated in detail above. However, the embodiments of the present invention are not limited to the particular embodiments described herein. Rather, the components and/or steps of each embodiment may be used independently and separately from the other components and/or steps described herein. Each component and/or each step of one embodiment may also be used in conjunction with other components and/or steps of other embodiments. In introducing elements/components/etc. described and/or illustrated herein, the terms "a," "an," and "the above-mentioned," etc. are used to indicate that one or more elements/components/etc. are present. The terms "comprising", "including", and "having" are used in an open-ended inclusive sense and mean that there may be additional elements/components/etc. in addition to the listed elements/components/etc. In addition, the terms "first" and "second" in the claims and the description are used only as labels, and are not intended to be numerical limitations on their objects.

## Claims

1. A battery pack, **characterized by** comprising:
a battery box (100);
a cylindrical battery (200) disposed in the battery box (100), wherein two end surfaces of the cylindrical battery (200) are a first surface (210) and a second surface (220), respectively; a cylindrical surface of the cylindrical battery (200) is a third surface (230); the first surface (210) and the second surface (220) are arranged at intervals in a first direction (X) and are respectively perpendicular to the first direction (X); the first direction (X) is an axial direction of the cylindrical battery (200); the third surface (230) is connected between the first surface (210) and the second surface (220); a first weld mark (231) is formed at a connection region of the third surface (230) and the first surface (210); the third surface (230) is provided with a first insulating layer (240) which does not cover the first weld mark (231); and
a fixing plate (300) disposed on the third surface (230) of the cylindrical battery (200) and made of a metal material, wherein the fixing plate (300) is disposed opposite and fixedly connected to the third surface (230);
wherein the first weld mark (231) is spaced apart from the fixing plate (300); and a minimum spacing between the first surface (210) and an adjacent edge of the fixing plate (300) in the first direction (X) is 1.5 mm-30 mm.

2. The battery pack according to claim 1, **characterized in that** a second weld mark (232) is formed at a connection region between the third surface (230) and the second surface (220); the second weld mark (232) is spaced apart from the fixing plate (300); and a minimum spacing between the second surface (220) and an adjacent edge of the fixing plate (300) in the first direction (X) is greater than or equal to 1.5 mm-30 mm.

3. The battery pack according to claim 1, **characterized in that** the third surface (230) is integrally formed with the second surface (220); and a minimum spacing between the second surface (220) and an adjacent edge of the fixing plate (300) in the first direction (X) is 1.5 mm-2.8 mm.

4. The battery pack according to claim 1, **characterized in that** a length of the fixing plate (300) is 5%-95% of a length of the third surface (230) in the first direction (X).

5. The battery pack according to claim 1, **characterized in that** at least two of the cylindrical batteries (200) are arranged to form a battery column (202) in a second direction (Y) perpendicular to the first direction (X); and at least two of the battery columns (202) are arranged to form a battery set (201) in a third direction (Z) perpendicular to the first direction (X) and perpendicular to the second direction (Y); wherein the fixing plate (300) is disposed between adjacent two of the battery columns (202) belonging to one of the battery sets (201).

6. The battery pack according to any one of claims 1-5, **characterized in that** the fixing plate (300) has an elastic modulus of 10 Gpa or more.

7. The battery pack according to any one of claims 1-5, **characterized in that** the first insulating layer (240) is an insulating coating.

8. The battery pack according to any one of claims 1-5, **characterized in that** a second insulating layer (310) is provided at a surface of the fixing plate (300).

9. The battery pack according to claim 8, **characterized in that** the second insulating layer (310) is an insulating coating.

10. The battery pack according to any one of claims 1-5, **characterized in that** the fixing plate (300) has a thickness of 0.5 mm-10 mm.
